# EUROPEAN PATENT SPECIFICATION

(11) **EP 4 639 841 B1**
(45) Date of publication and mention of the grant of the patent: **18.02.2026**
(21) Application number: 22840353.1
(22) Date of filing: 22.12.2022
(51) Int. Cl.: H04L 9/40

(54) **AUTHENTICATION NOTIFICATION MESSAGE**
AUTHENTIFIZIERUNGSBENACHRICHTIGUNGSNACHRICHT
MESSAGE DE NOTIFICATION D'AUTHENTIFICATION

(43) Date of publication of application: 29.10.2025
(73) Proprietor: Telefonaktiebolaget LM Ericsson (publ), 164 83 Stockholm (SE)
(72) Inventor: MARCENARO, Carla, 16162 GENOA (IT); CROVATO, Marco, 16152 GENOVA (IT); CAZZOLA, Pierpaolo, 16152 GENOVA (IT)
(74) Representative: Ericsson
(86) International application number: PCT/SE2022/051233
(87) International publication number: WO 2024/136710

(56) References cited:
- US-A1- 2018 309 748
- SERMERSHEIM NOVELL J ET AL: "Password Policy for LDAP Directories draft-behera-ldap-password-policy-11; draft-behera-ldap-password-policy-11.txt", no. 11, 22 February 2022 (2022-02-22), pages 1 - 42, XP015150266, Retrieved from the Internet <URL:https://tools.ietf.org/html/draft-behera-ldap-password-policy-11> [retrieved on 20220222]
- EDITOR: J SERMERSHEIM NOVELL ET AL: "LDAP: The Protocol; draft-ietf-ldapbis-protocol-31.txt", LDAP: THE PROTOCOL; DRAFT-IETF-LDAPBIS-PROTOCOL-31.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. ldapbis, no. 31, 1 May 2005 (2005-05-01), XP015041082

## Description

### TECHNICAL FIELD

The invention relates to a Lightweight Directory Access Protocol (LDAP) server device, a LDAP client device, a network function device, an operational support system (OSS), corresponding methods, and computer programs.

### BACKGROUND

Telecom network operations are complex. Diverse and demanding use cases increase the complexity, e.g. increased frequency band choices, virtualization, network slicing, as well as ongoing disaggregation and distribution of radio access network (RAN) functions, such as through Open RAN (O-RAN).

In this context, security considerations are more critical. In particular, there is a need to prevent a malicious actor to gain access to a resource.

An O-RAN Service Management and Orchestration (SMO) is a component of an Operational Support System (OSS). The O-RAN SMO acts as a gateway to a network. Authentication and authorization are key functions in an OSS. LDAP is a protocol proposed for authentication and authorization of users in a centralized manner, as defined in Internet Engineering Task Force (IETF) Request For Comments (RFC) 4511 Lightweight Directory Access Protocol (LDAP). A decentralized user authentication can be performed based on X.509 certificates, and for example using Hypertext Transfer Protocol Secure (HTTPS)/NetConfOver Transport Layer Security (TLS) interfaces. In this case, LDAP is used for authorization of the user.

US 2018/309748 A1 discloses to share single sign on through LDAP integration. Another known document is an IETF draft entitled "Password Policy for LDAP Directories".

A challenge of the current use of LDAP is that an LDAP server is not involved in an authentication of the user. As a consequence, the LDAP server is unable to detect whether the user is an inactive user or an active user. Thus, the user risks to be erroneously disabled.

### SUMMARY

An object of the invention is to avoid having a user being erroneously disabled from an LDAP equipped computer system. The present invention is defined by the subject matter of the appended set of claims.

According to a first aspect a Lightweight Directory Access Protocol, LDAP, server device for storing a first attribute value corresponding to a latest registered time for user login to a network function device, and a second attribute value corresponding to a time when the user was latest authenticated, is provided. The LDAP server device is configured to receive, from an LDAP client device, an authentication notification message after the user has been successfully authenticated. The authentication notification message indicates a successful authentication of the user and is performed by the network function device. The LDAP server device is configured to update the second attribute value that corresponds to or is a time associated with the successful authentication of the user. Hereby is achieved that the LDAP server device is enabled to have knowledge of the latest successful authentication of the user independently of an authentication process of the user.

According to an embodiment of the first aspect, the authentication notification message comprises a timestamp corresponding to the time associated with the successful authentication of the user.

According to an embodiment of the first aspect, the LDAP server device is configured to generate the second attribute value after reception of the authentication notification message.

According to an embodiment of the first aspect, the LDAP server device is configured to send, to the LDAP client device, a response message to the authentication notification message. The response message comprises the second attribute value before the update of the second attribute value.

According to an embodiment of the first aspect, the authentication notification message is an LDAP Extended operation Request for notifying the successful authentication of the user.

According to an embodiment of the first aspect, the LDAP server device is configured to provide the second attribute value to an identity management service function.

According to an embodiment of the first aspect, the LDAP server device is configured to be a part of an operational support system for a communication network.

According to an embodiment of the first aspect, the LDAP server device comprises an LDAP database in which the first attribute and the second attribute are stored for each user account of the operational support system.

According to a second aspect an LDAP client device is provided. The LDAP client is configured to send, to an LDAP server device, an authentication notification message after a user has been successfully authenticated. The authentication notification message notifies that the user has been successfully authenticated by a network function device.

According to an embodiment of the second aspect, the authentication notification message comprises a timestamp corresponding to a time associated with the successful authentication of the user.

According to an embodiment of the second aspect, the LDAP client device is configured to receive, from the LDAP server device, a response message to the authentication notification message. The response message comprises an attribute corresponding to a time the user was latest successfully authenticated.

According to an embodiment of the second aspect, the authentication notification message is an LDAP Extended Operation Request for notifying the successful authentication of the user.

According a third aspect a network function device comprising a network function for a communication network and a LDAP client device according to any one of the embodiments of the second aspect, is provided.

In an embodiment of the third aspect, the network function device is configured to communicate with an end user device used by the user and authenticate the user using a Secure Shell (SSH) protocol.

In an embodiment of the third aspect, the network function device is configured to communication with an end user device used by the user and authenticate the user using a TLS protocol.

According to a fourth aspect an operational support system for a communication network is provided. The operation support system comprises a LDAP server device according to any one of the embodiments of the first aspect, and an LDAP client device according to any one of the second embodiment.

According to an embodiment of the fourth aspect, the operation support system comprises an identity management service function.

According to an embodiment of the fourth aspect, the identity management service function is configured to detect whether the user is inactivate based on the second attribute stored in the operation support system and disable the user if the user is inactive.

According to a fifth aspect a method performed by an LDAP server device, for storing a first attribute value corresponding to a latest registered time for user login to a network function device, and a second attribute value corresponding to a time when the user was latest authenticated, is provided. The method comprises receiving, from an LDAP client device, an authentication notification message after the user has been successfully authenticated, the authentication notification message indicating a successful authentication of the user performed by the network function device. The method comprises updating the second attribute value to a value that corresponds to or is a time associated with the successful authentication of the user.

According to an embodiment of the fifth aspect, the authentication notification message comprises a timestamp corresponding to the time associated with the successful authentication of the user.

According to an embodiment of the fifth aspect, the method comprises generating the second attribute after reception of the authentication notification message.

According to an embodiment of the fifth aspect, the method comprises sending, to the LDAP client device, a response message to the authentication notification message, wherein the response message comprises the second attribute value before the updating of the second attribute value.

According to an embodiment of the fifth aspect, the authentication notification message is an LDAP extended operation request for notifying the successful authentication of the user.

According to an embodiment of the fifth aspect, the method comprises providing the second attribute value to an identity management service function.

According to an embodiment of the fifth aspect, the LDAP server device is a part of an operational support system for a communication network.

According to an embodiment of the fifth aspect, the LDAP server device comprises an LDAP database in which the first attribute and the second attribute are stored for each user account of the operational support system.

According to a sixth aspect a method performed by an LDAP client device is provided. The method comprises sending, to an LDAP server device, an authentication notification message after a user has been successfully authenticated, wherein the authentication notification message notifies that the user has been successfully authenticated by a network function device.

According to an embodiment of the sixth aspect, the authentication notification message comprises a timestamp corresponding to a time associated with the successful authentication of the user.

According to an embodiment of the sixth aspect, the method comprises receiving, from the LDAP server device, a response message to the authentication notification message. The response message comprises an attribute value corresponding to a time the user was latest successfully authenticated.

According to an embodiment of the sixth aspect, the authentication notification message is an LDAP Extended Operation Request for notifying the successful authentication of the user.

According to a seventh aspect a method performed by a network function device is provided. The network function device comprises a network function for a communication network and a LDAP client device. The method comprises sending, to an LDAP server device, an authentication notification message which notifies that the user has been successfully authenticated by a network function device.

According to an embodiment of the seventh aspect, the method comprises communicating with an end user device used by the user and authenticating the user using an SSH protocol.

According to an embodiment of the seventh aspect, the method comprises communicating with an end user device used by the user and authenticating the user using a TLS protocol.

According to an eighth aspect a method performed by an operational support system for a communication system is provided. The operational support system comprises an LDAP server device performing the method according to any one of the embodiments of the fifth aspect of the invention. The operational support system comprises an LDAP client device performing the method according to any one of the embodiments of the sixth aspect.

According to an embodiment of the eighth aspect, the operational support system comprises an identity management service function, wherein the identity management service function detects whether the user is inactive based on the second attribute stored in the operational support system and disables the user if the user is inactive.

According to a ninth aspect a computer program, for storing a first attribute value corresponding to a latest registered time for user login to a network function device, and a second attribute value corresponding to a time when the user was latest authenticated, is provided. The computer program comprises instructions, which when executed by an LDAP server device, causes the LDAP server device to receive, from an LDAP client device, an authentication notification message after the user has been successfully authenticated, the authentication notification message indicating a successful authentication of the user performed by the network function device. The computer program comprises instructions, which when executed on the LDAP server device, causes the LDAP server to update the second attribute value to a value that corresponds to or is a time associated with the successful authentication of the user.

According to an embodiment of the ninth aspect, the computer program comprises instructions, which when executed by the LDAP server device, causes the LDAP server device to generate the second attribute value after reception of the authentication notification message.

According to an embodiment of the ninth aspect, the computer program comprises instructions, which when executed by the LDAP server device, causes the LDAP server device to send, to the LDAP client device, a response message to the authentication notification message. The response message comprises the second attribute value before the update of the second attribute value.

According to an embodiment of the ninth aspect, the authentication notification message is an LDAP Extended Operation request for notifying the successful authentication of the user.

According to an embodiment of the ninth aspect, the computer program comprises instruction, which when executed by the LDAP server device, causes the LDAP server device to provide the second attribute value to an identity management service function.

According to an embodiment of the ninth aspect, the computer program comprises instructions, which when executed by the LDAP service device, causes the LDAP server device to store, in an LDAP database in the LDAP server device, the first attribute and the second attribute for each user account of an operational support system for a communication network.

According to a tenth aspect a computer program is provided. The computer program comprises instructions, which when executed by a LDAP client device, causes the LDAP client device to send, to an LDAP server device, an authentication notification message after a user has been successfully authenticated. The authentication notification message notifies the LDAP server device that the user has been successfully authenticated by a network function device.

According to an embodiment of the ninth aspect, the authentication notification message comprises a timestamp corresponding to a time associated with the successful authentication of the user.

According to an embodiment of the ninth aspect, the computer program comprises instructions, which when executed by the LDAP client device, causes the LDAP client device to receive, from the LDAP server device, a response message to the authentication notification message. The response message comprises an attribute value corresponding to a time the user was latest successfully authenticated.

According to an embodiment of the ninth aspect, the authentication notification is an LDAP Extended operation request.

According to an eleventh aspect a computer program storage medium is provided. The computer program storage medium comprises a computer program according to any embodiments of the ninth aspect of the invention, and/or any embodiments of the tenth aspect of the invention.

A disadvantage of the prior art discussed above in the Background section, is that a time corresponding to the latest authentication time is not available, and thus a user risks to be disabled erroneously.

The invention may have one or more of the following advantages.

An advantage of the invention is enabling detection of an inactive user.

An advantage of the invention is enabling a notification to the LDAP client device the latest successful authentication of the user independently of the authentication process.

An advantage of the invention is to improve security of the system.

Further objectives of, features of, and advantages with, the invention will become apparent when studying the following detailed disclosure, the drawings, and the appended claims. Those skilled in the art realize that different features of the invention can be combined to create embodiments other than those described in the following.

### BRIEF DESCRIPTION OF THE DRAWINGS

The above, as well as additional objects, features and advantages of the invention, will be better understood through the following illustrative and non-limiting detailed description of embodiments of the invention, with reference to the appended drawings, in which:
Figure 1 shows a communication network in accordance with an embodiment of the invention.
Figure 2 shows a method performed by a LDAP server device, according to an embodiment of the invention.
Figure 3 shows a method performed by a LDAP client device, according to an embodiment of the invention.
Figure 4 shows a method performed by a network function device, according to an embodiment of the invention.
Figure 5 shows a method performed by an OSS for a communication network, according to an embodiment of the invention.
Figure 6 shows an illustrative example of LDAP Extended Operation messages exchanged between LDAP client device and LDAP server device.
Figure 7 shows a block diagram of a LDAP server device, according to an embodiment of the invention.
Figure 8 shows a block diagram of an LDAP client device, according to an embodiment of the invention.
Figure 9 shows a block diagram of a network function device, according to an embodiment of the invention.
Figure 10 shows a block diagram of an operational support system, according to an embodiment of the invention.
Figure 11 shows a block diagram of an LDAP server device, according to an embodiment of the invention.
Figure 12 shows a block diagram of an LDAP client device, according to an embodiment of the invention.

All figures are schematic, and generally only show parts which are necessary in order to elucidate the invention, wherein other parts may be omitted or merely suggested.

### DETAILED DESCRIPTION

The invention will now be described more fully herein with reference to the accompanying drawings, in which certain embodiments are shown. This invention may, however, be embodied in many different forms and should not be construed as limited to the embodiments set forth herein. Rather, these embodiments are provided by way of example so that this disclosure will be thorough and complete, and will fully convey the scope of the invention to those skilled in the art.

The invention disclosed herein may be used to detect an inactive user.

LDAP defines Extended Operation in IETF RFC 4511 for allowing for additional operations to be defined for services not already available in the LDAP protocol. A LDAP server device for storing a first attribute value corresponding to a latest registered time for user login to a network function device, and a second attribute value corresponding to a time when the user was latest authenticated is disclosed herein. The LDAP server device is configured to receive, from an LDAP client device, an authentication notification message after the user has been successfully authenticated, the authentication notification message indicating a successful authentication of the user performed by the network function device. The LDAP client device is configured to update the second attribute value to a value that corresponds to or is a time associated with the successful authentication of the user.

The authentication notification message may be part of a new LDAP Extended Operation. The new LDAP Extended Operation is named AuthenticationNotify. The new LDAP Extended Operation allows an LDAP client to make requests and receive response with predefined syntaxes and semantics, to an LDAP server. The new LDAP Extended Operation consists of a new LDAP Extended request, and a new LDAP Extended response. The new LDAP Extended request is in the form of the authentication notification message and may be named LDAP AuthenticationNotify Request. The new LDAP Extended response is in the form of a response message which may be named LDAP AuthenticationNotify Response.

The new LDAP Extended Operation enables to modify a latest authentication time of a user. In an embodiment, the new LDAP Extended Operation is used with confidentiality protection, such as Start TLS, as written in IETF RFC 2830.

The new LDAP Extended Operation enables to notify the LDAP server of a successful authentication of a user.

The new LDAP Extended Operation enables to notify the LDAP client of a latest authentication time the user was authenticated.

The new LDAP Extended Operation is independent of the authentication process.

In Table 1, an illustrative syntax of the LDAP AuthenticationNotify Request is presented. The LDAP AuthenticationNotify Request comprises a requestName field containing a dotted-decimal representation of a unique OBJECT IDENTIFIER corresponding to the LDAP AuthenticationNotify. The LDAP AuthenticationNotify Request comprises a requestValue field, and the requestValue field comprises information in a form defined by the LDAP AuthenticationNotify Request. The requestValue field is encapsulated inside an OCTET STRING. The requestValue field of the LDAP AuthenticationNotify Request comprises a user identity. The user identity may be named user_identity. The user_identity may be an LDAP Distinguished Name, as written in IETF RFC 2253. The requestValue field of the LDAP AuthenticationNotify Request comprises a time value associated with the successful authentication of the user. The time value corresponds to a time when the user was latest authenticated. The time value may be a timestamp, such as a time in Coordinated universal Time, UTC, as written in IETF RFC 4517. The time value may be named authentication_timestamp.

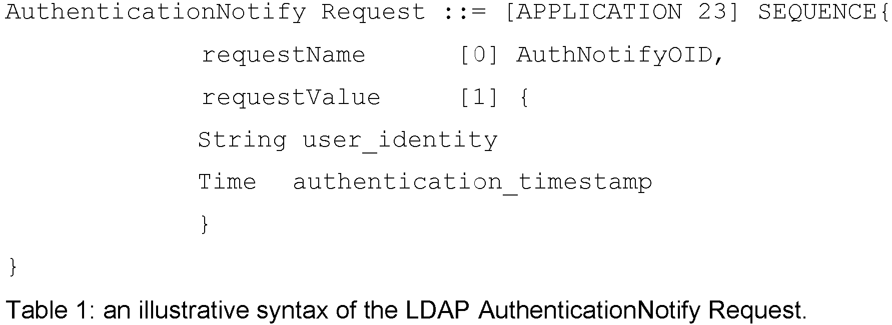

A second attribute value is provided. The second attribute value may be named LatestAuthenticationTime. The LDAP server stores the second attribute value corresponding to a time when the user was latest authenticated. The second attribute value may be stored in a LDAP database. The second attribute value is updated to a value that corresponds to or is a time associated with the successful authentication of the user. The second attribute value is updated after reception of the LDAP AuthenticationNotify Request.

The LDAP server responds to the LDAP AuthenticationNotify Request by sending the LDAP AuthenticationNotify Response. In Table 2, an illustrative syntax of the LDAP AuthenticationNotify Response is presented. The LDAP AuthenticationNotify Response may comprise the requestName field containing a dotted-decimal representation of a unique OBJECT IDENTIFIER corresponding to the LDAP AuthenticationNotify. The LDAP AuthenticationNotify response comprises a responseValue field, the responseValue field comprises information in a form defined by the LDAP AuthenticationNotify. The requestValue field is encapsulated inside an OCTET STRING. The requestValue field of the LDAP AuthenticationNotify Response comprises a previous second attribute value. The previous second attribute value corresponds to a time when the user was latest authenticated previous to the update of the second time attribute value by the LDAP server. The previous second attribute value may be a timestamp, such as a time in Coordinated universal Time, UTC, as written in RFC 4517. The previous second attribute value may be named previous_authentication_timestamp.

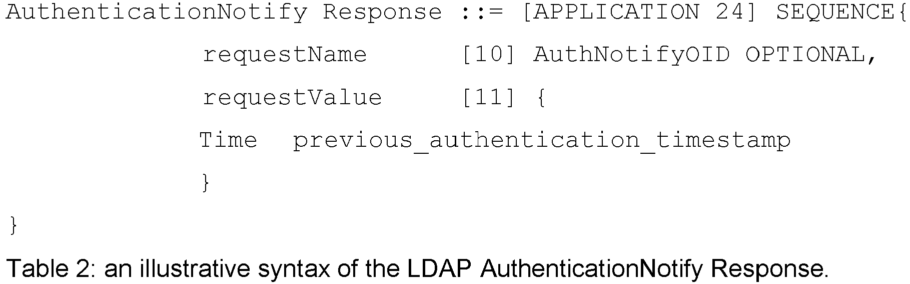

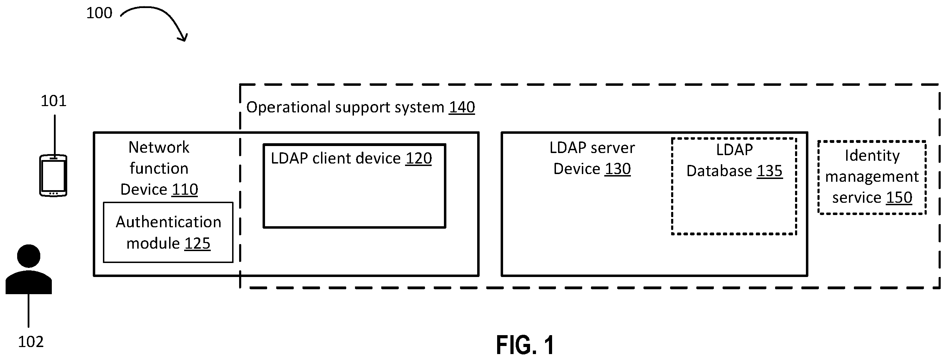

In **Figure 1****,** a communication network 100 is provided. In an embodiment, the communication network 100 is a wireless communication network. In some embodiments, the wireless communication network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as a future 3^{rd} Generation Partnership Project (3GPP) standard like a future 6G network, the Worldwide Interoperability for Microwave Access (WiMax), Bluetooth, Z-Wave and/or ZigBee standards.

The communication network 100 comprises an end user device 101 used by a user 102. The user 102 is a human being.

The end user device 101 refers to a device capable, configured, arranged and/or operable to communicate wirelessly with network nodes and/or other wireless devices. Communicating wirelessly may involve transmitting and/or receiving wireless signals using electromagnetic waves, radio waves, infrared waves, and/or other types of signals suitable for conveying information through air. In some embodiments, the end user device 101 may be configured to transmit and/or receive information without direct user 102 interaction. For instance, the end user device 101 may be designed to transmit information to a network on a predetermined schedule, when triggered by an internal or external event, or in response to requests from the communication network 100. Examples of the end user device 101 include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc. The end user device 101 may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device.

As yet another specific example, in an Internet of Things (IoT) scenario, the end user device 101 may represent a machine or other device that performs monitoring and/or measurements, and transmits the results of such monitoring and/or measurements to another end user device and/or a network node. The end user device 101 may in this case be a machine-to-machine (M2M) device, which may in a 3GPP context be referred to as an MTC device. As one particular example, the end user device 101 may be a user equipment (UE) implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, the end user device 101 may represent a vehicle or other equipment that is capable of monitoring and/or reporting on its operational status or other functions associated with its operation. The end user device 101 as described above may represent the endpoint of a wireless connection, in which case the device may be referred to as a wireless terminal. Furthermore, the end user device 101 as described above may be mobile, in which case it may also be referred to as a mobile device or a mobile terminal.

The communication network 100 comprises a network function device 110. The network function device 110 comprises a function for the communication network 100. The network function device 110 is responsible for centralized user authentication and authorization of the user 102. The network function 130 comprises a function for an LDAP client device 120. In an embodiment, the network function device 110 comprises an authentication module 125 for authentication of the user 102.

The communication network 100 comprises the LDAP client device 120. In an embodiment, the LDAP client device 120 hosts an LDAP client software.

The communication network 100 comprises an LDAP server device 130. In an embodiment, the LDAP server device 130 hosts a LDAP server software. In an embodiment, like the one illustrated in Fig. 1, the LDAP server device 130 also comprises an LDAP database 135.

The LDAP client device 120 and the LDAP server device 130 are capable of transmitting and/or receiving LDAP messages. An LDAP message transmitted by the LDAP client device 120 may comprise the LDAP AuthenticationNotify Request as the one presented in Table 1. An LDAP message received by the LDAP server device 130 may comprise the LDAP AuthenticationNotify Request as the one presented in Table 1. An LDAP message transmitted by the LDAP server device 130 may comprise the LDAP AuthenticationNotify Response as the one presented in Table 2. An LDAP message received by the LDAP client device 120 may comprise the LDAP AuthenticationNotify Response as the one presented in Table 2.

In an embodiment, the communication network 100 comprises an OSS 140. The OSS 140 is responsible for centralized authentication and authorization of the user 102. The OSS 140 comprises the LDAP server device 130, and the LDAP client device 120. In an embodiment, such as the one illustrated in Fig. 1, the OSS 140 comprises an identity management service function 150. The identity management service function 150 is responsible a centralized management of users. The identity management service function 150 is responsible for detecting inactivity and disabling an inactive user.

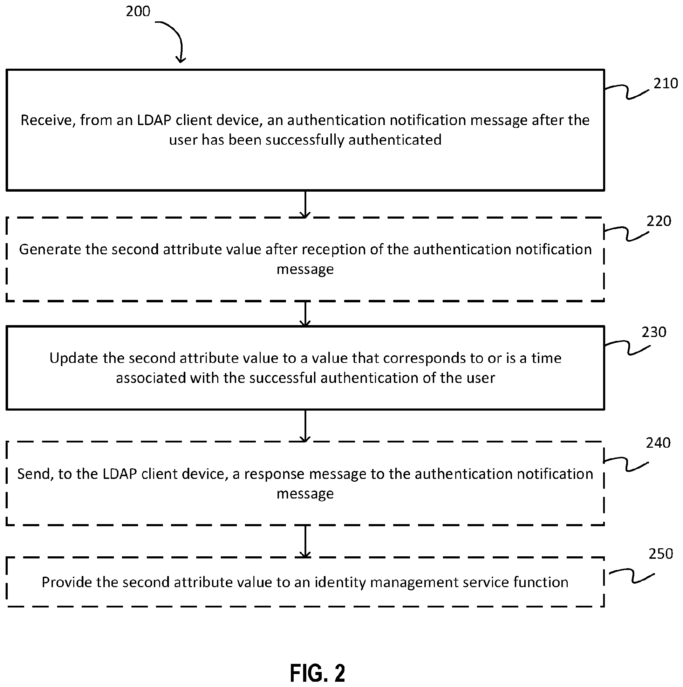

In **Figure 2****,** a flowchart depicting embodiments of a method 200 performed by the LDAP server device 130, for storing a first attribute value corresponding to a latest registered time for user login to the network function device 110, and a second attribute value corresponding to a time when the user 102 was latest authenticated, is provided.

In an embodiment, the first attribute value corresponds to Latest Login Time attribute corresponding to a LDAP Bind Operation Request message, as written in RFC 4511. The second attribute value differs from the first attribute value. The second attribute value corresponds to the second attribute value defined above.

The method 200 comprises receiving 210, from the LDAP client device 120, an authentication notification message after the user 102 has been successfully authenticated. The authentication notification message indicates a successful authentication of the user 102 performed by the network function device 110. In an embodiment, the authentication notification message comprises a timestamp corresponding to the time associated with the successful authentication of the user. In an embodiment, the authentication notification message is the new LDAP Extended Operation Request as defined above. In an embodiment, the new Extended Operation Request is the LDAP Authentication Notify request as defined above.

The method 200 comprises updating 230 the second attribute value to a value that corresponds to or is a time associated with the successful authentication of the user 102.

In case the LDAP server device 130 does not recognize one or more fields of the authentication notification message received in step 210 of the method 200, then the LDAP server device 130 does not update the second attribute value in step 230 of the method 200. The LDAP server device 130 sends to the LDAP client device 110 a non-success response message to indicate that the LDAP server device 130 is not able to complete the update in step 230 of the method 200.

In an embodiment, such as the one illustrated in Figure 2, the method 200 also comprises generating 220 the second attribute value after reception of the authentication notification message. The authentication notification message corresponds to the authentication notification message received in step 210 of the method 200.

In an illustrative example, the LDAP server device 130 updates the second attribute value with the timestamp comprised in the authentication notification message received in step 210 of the method 200, as follow:
- the LDAP server device 130 receives the authentication notification message comprising the timestamp, the timestamp is named, for illustrative purposes, t1;
- the LDAP server device 130 updates the second attribute value to t1.

In an illustrative example, the LDAP server device 130 updates the second attribute with time associated with the successful authentication of the user 102, as follow:
- the LDAP server device 130 receives the authentication notification message of step 210 of the method 200;
- the LDAP server device 130 generates the second attribute value corresponding to the LDAP server device 130 local time, the LDAP server device 130 local time is named, for illustrative purposes, t2;
- the LDAP server 110 updates the second attribute value to t2.

In other words, in an embodiment, the updating in step 230 of the method 200 is based on the timestamp comprised in the authentication notification message received in step 210 of the method 200. In another embodiment, the updating in step 230 of the method 200 is based on the LDAP server device 130 local time.

In an embodiment, such as the one illustrated in Figure 2, the method 200 also comprises sending 240, to the LDAP client device 120, a response message to the authentication notification message received in 210 of the method 200. The response message comprises a second attribute value before the update performed in step 230 of the method 200. In an embodiment, the response message is sent after a successful authentication of the user 102 - this enables for the user 102 to be aware of the time when the user 102 was latest authenticated, so as to know whether the user's credentials have been comprised and used by another user. The response message sent in step 240 of the method 200 corresponds to the new LDAP Extended Operation Response as defined above. In an embodiment, the new LDAP Extended Operation Response is the LDAP AuthenticationNotify Response as defined above.

In an illustrative example, the LDAP server device 130 sends the response message, as follow:
- the LDAP server device 130 has already stored a value for the second attribute value from a previous latest authentication of the user 102, the value is named, for illustrative purposes, t0;
- the LDAP server device 130 receives (in step 210 of the method 200) the authentication notification message comprising the timestamp, the timestamp is named, for illustrative purposes, t1;
- the LDAP server device 130 updates (in step 230 of the method 200) the second attribute value to t1;
- the LDAP server device 130 sends (in step 240 of the method 200) the response message, the response message comprises the second attribute value before the update, t0.

In an illustrative example, the LDAP server device 130 sends the response message, as follow :
- the LDAP server device 130 has already stored a value for the second attribute value from a previous latest authentication of the user 102, the value is named, for illustrative purposes, t0;
- the LDAP server device 130 receives (in step 210 of the method 200) the authentication notification message of step 210 of the method 200;
- the LDAP server device 130 generates (in step 220 of the method 200) the second attribute value corresponding to the LDAP server device 130 local time, the LDAP server device 130 local time is named, for illustrative purposes, t2;
- the LDAP server 110 updates (in step 230 of the method 200) the second attribute value to t2;
- the LDAP server device 130 sends (in step 240 of the method 200) the response message, the response message comprises the second attribute before the update, t0.

In an embodiment, the authentication notification message, received in step 210 of the method 200, is an LDAP Extended Operation Request for notifying the successful authentication of the user 102. The LDAP Extended Operation Request corresponds to the new Extended Operation Request as defined above.

In an embodiment, such as the one illustrated in Figure 2, the method 200 also comprises providing 250 the second attribute value to the identity management service function 150.

In an embodiment, the LDAP server device 130 is also configured to be part of the OSS 140 for the communication network 100.

In an embodiment, the LDAP server device 130 also comprises the LDAP database 135 in which the first attribute and the second attribute are stored for each user account of the OSS 140.

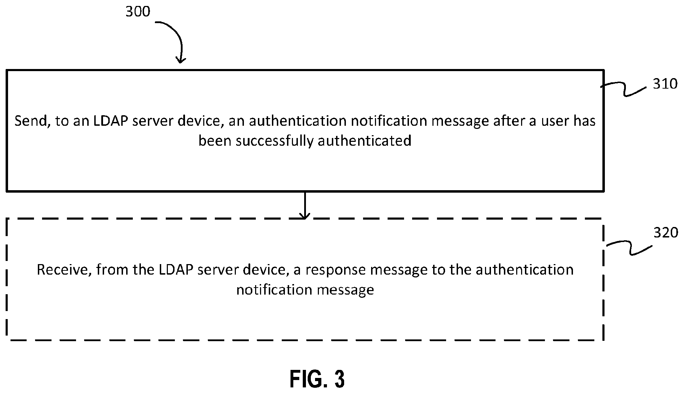

**In** **Figure 3****,** a flowchart depicting embodiments of a method 300 performed by the LDAP client device 120 is provided.

The method 300 comprises sending 310, to the LDAP server device 130, an authentication notification message after the user has been successfully authenticated. The authentication notification message notifies that the user has been successfully authenticated by the network function device 110. The authentication notification message sent in step 310 of the method 300 corresponds to the authentication notification message received in step 210 of the method 200.

In an embodiment, such as the one illustrated in Figure 3, the method 300 also comprises receiving 320, from the LDAP server device 130, a response message to the authentication notification message sent in step 310 of the method 300 and received in step 210 of the method 200.

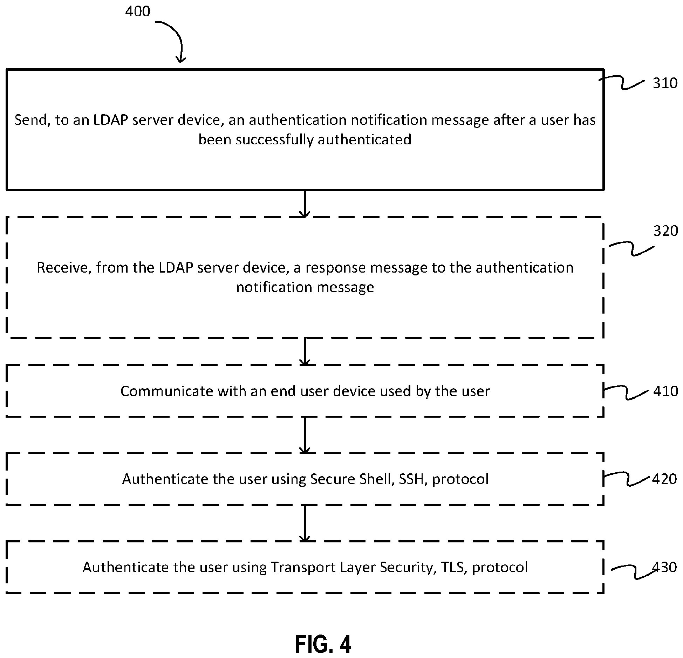

**In** **Figure 4****,** a flowchart depicting embodiments of a method 400 performed by the network function device 110 is provided.

The method 400 comprises step 310 of the method 300.

In an embodiment, the method 400 also comprises step 320 of the method 300.

In an embodiment, the method 400 also comprises communicating 410 with an end user device 101 used by the user 102, and authenticate the user 102 using Secure Shell, SSH, protocol. In an embodiment, the method 400 comprises communicating with the end user device 101 used by the user 102, and authenticate the user 102 using SSH File Transfer Protocol, SFTP.

In an embodiment, the method 400 also comprises communicating 420 with the end user device 101 used by the user 102, and authenticating the user 102 using Transport Layer Security, TLS, protocol. The person skilled in the art would understand that TLS includes other secure protocols. For example, but non limiting, the other secure protocols comprise one or more of File Transfer Protocol, FTP, HyperText Transfer Protocol Secure, HTTPS, based on TLS.

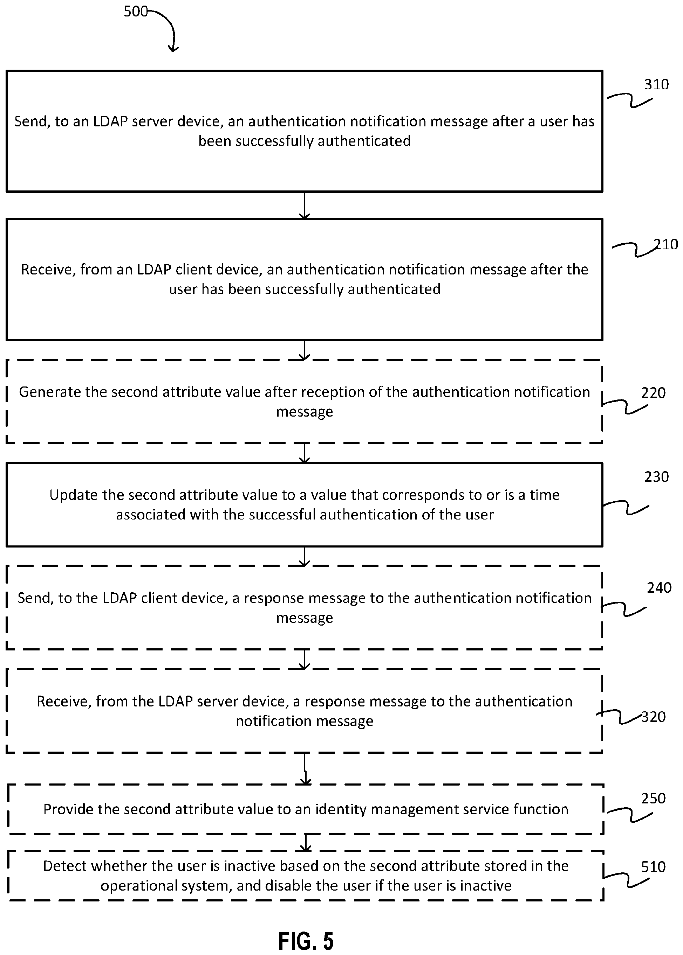

In **Figure 5****,** a flowchart depicting embodiments of a method 500 performed by the OSS 140 is provided.

The method 500 comprises step 310 of the method 300.

The method 500 comprises step 210 of the method 200.

The method 500 comprises step 230 of the method 200.

In an embodiment, the method 500 also comprises step 220 of the method 200.

In an embodiment, the method 500 also comprises step 240 of the method 200.

In an embodiment, the method 500 also comprises step 320 of the method 300.

In an embodiment, the method 500 also comprises step 250 of the method 200.

In an embodiment, the identity management service function 150 detects 510 whether the user 102 is inactive based on the second attribute stored in the OSS 140, and disables the user 102 if the user 102 is inactive. In an embodiment, detection whether the user 102 is inactive is performed periodically.

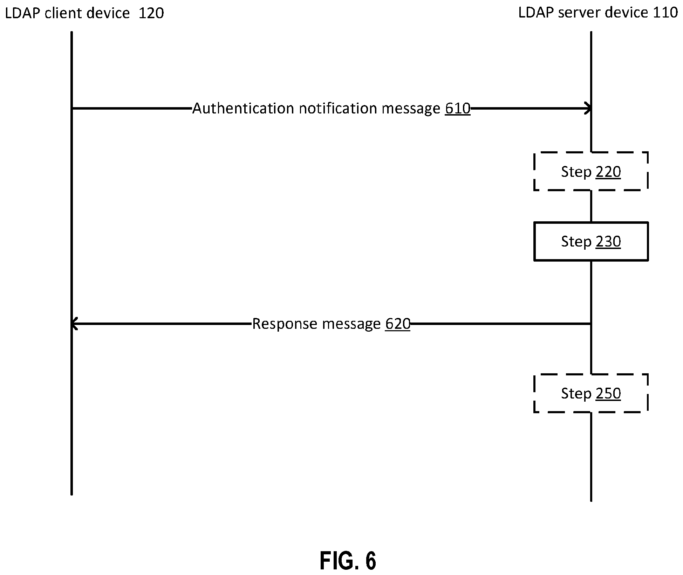

In **Figure 6****,** an illustrative example of messages exchanged between the LDAP client device 120 and the LDAP server device 130, and operations performed by either the LDAP client device 120 and/or the LDAP server device 130, according to embodiments is provided.

The LDAP 120 is configured to send an authentication notification message 610 to the LDAP server device 130. In an embodiment, the authentication notification message 610 corresponds to the authentication notification message sent in step 310 of the method 300, and the authentication notification message received in step 210 of the method 200.

In an embodiment, the LDAP server device 130 is also configured to perform step 220 of the method 200.

The LDAP server device 130 is configured to perform step 230 of the method 200.

In an embodiment, the LDAP server device 130 is also configured to send a response message 620 to the LDAP client device 120. In an embodiment, the response message 620 corresponds to the response message sent in step 240 of the method 200, and the response message received in step 320 of the method 300.

In an embodiment, the LDAP server device 130 is also configured to perform step 250 of the method 200.

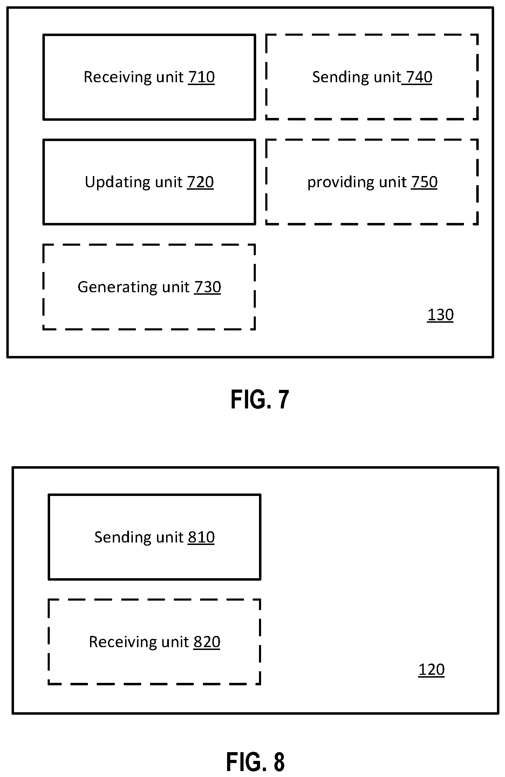

**In** **Figure 7****,** a block diagram of the LDAP server device 130 is provided. The LDAP server device 130 comprises a receiving unit 710, and an updating unit 720.

The receiving unit 710 is configured to perform the step 210 of the method 200 as described above.

The updating unit 720 is configured to perform the step 230 of the method 200 as described above.

In an embodiment, the LDAP server device 130 also comprises a generating unit 730. The generating unit 730 is configured to perform the step 220 of the method 200 as described above.

In an embodiment, the LDAP server device 130 also comprises a sending unit 740. The sending unit 440 is configured to perform the step 240 of the method 200 as described above.

In an embodiment, the LDAP server device 130 also comprises a providing unit 750. The providing unit 750 is configured to perform the step 250 of the method 200 as described above.

In an embodiment, the updating unit 720, and the generating unit 430 are a same unit. In an embodiment, the receiving unit 710, the sending unit 740, and the providing unit 750 are a same unit, such as a transceiver unit.

The receiving unit 710, the updating unit 720, the generating unit 730, the sending unit 740, and the providing unit 750 may be implemented as a hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above with regards to the method 200.

**In** **Figure 8****,** a block diagram of the LDAP client device 120 is provided. The LDAP client device 120 comprises a sending unit 810.

The sending unit 810 is configured to perform the step 310 of the method 300 as described above.

In an embodiment, the LDAP client device 120 also comprises a receiving unit 820. The receiving unit 820 is configured to perform the step 320 of the method 300.

In an embodiment, the sending unit 810 and the receiving unit 820 are a same unit.

The sending unit 810 and the receiving unit 820 may be implemented as a hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above with regards to the method 300.

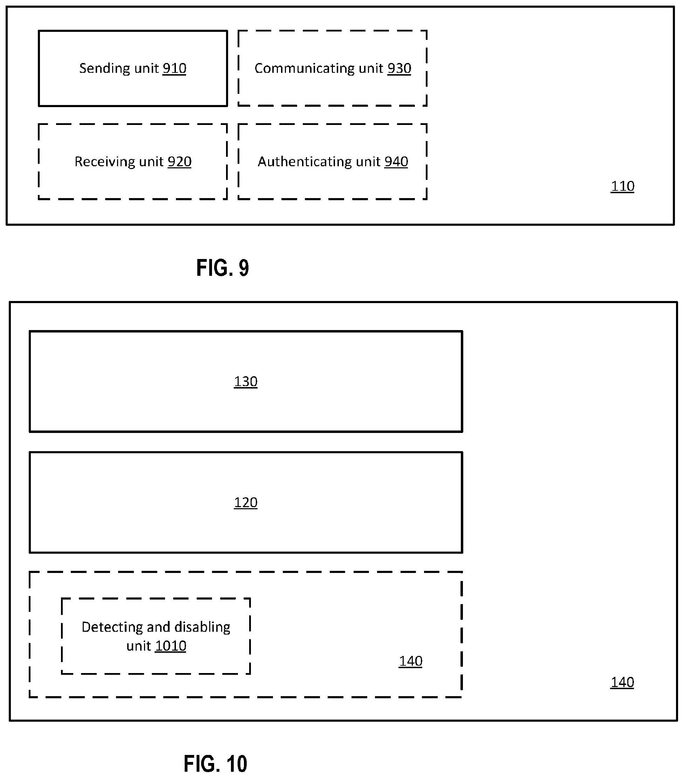

In **Figure 9****,** a block diagram of the network function device 110 is provided. The network function device 110 comprises a sending unit 910.

The sending unit 910 is configured to perform the step 310 of the method 300 as described above.

In an embodiment, the network function device 110 also comprises a receiving unit 920. The receiving unit 920 is configured to perform the step 320 of the method 300 as described above.

In an embodiment, the network function device 110 also comprises a communicating unit 930. The communicating unit 930 is configured to perform the step 410 of the method 400 as described above.

In an embodiment, the network function device 110 also comprises an authenticating unit 940. The authenticating unit 940 is configured to perform the step 420 and/or 430 of the method 400 as described above.

In an embodiment, the sending unit 910, receiving unit 920, and the communicating unit 930 are a same unit.

The sending unit 810, the receiving unit 920, the communicating unit 930, and the authenticating unit 940 may be implemented as a hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above with regards to the method 400.

In **Figure 10****,** a block diagram of the OSS 140 is provided. The OSS 140 comprises the LDAP server device 130. The OSS 140 comprises the LDAP client device 120.

In an embodiment, the OSS 140 also comprises the identity management service function 150. In an embodiment, the OSS 140 also comprises a detecting and disabling unit 1010. The detecting and disabling unit 1010 is configured to perform the step 510 of the method 500 as described above.

The detecting and disabling unit 1010 may be implemented as a hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above with regards to the method 500.

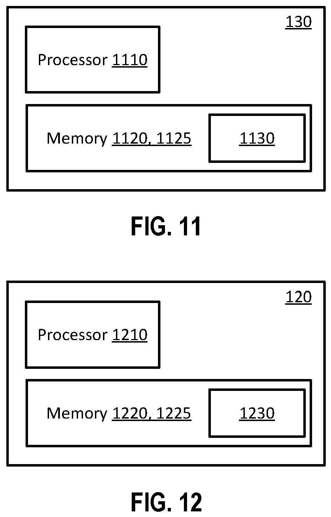

**In** **Figure 11****,** an embodiment of the LDAP server device 130 is provided. The LDAP server device 130 comprises a processor 1110, and a computer readable storage medium 1120 in the form of a memory 1125. The memory 1125 contains a computer program 1130 comprising instructions executable by the processor 1110 whereby the LDAP server device 130 is operative to perform the steps of the method 200.

**In** **Figure 12****,** an embodiment of the LDAP client device 120 is provided. The LDAP client device 120 comprises a processor 1210, and a computer readable storage medium 1220 in the form of a memory 1225. The memory 1225 contains a computer program 1230 comprising instructions executable by the processor 1210 whereby the LDAP client device 120 is operative to perform the steps of the method 300.

The (non-transitory) computer readable storage media mentioned above may be an Electrically Erasable Programmable Read-Only Memory (EEPROM), a flash memory, Field Programmable Gate Array, and a hard drive.

The processor 1110 of Figure 11, and the processor 1210 of Figure 12, may be a single CPU (Central processing unit), but could also comprise two or more processing units. For example, the processor 1110 of Figure 11, and the processor 1210 of Figure 12 may include general purpose microprocessors; instructions set processors and/or related chips sets and/or special purpose microprocessors such as Application Specific Integrated Circuit (ASICs). The processor 1110 of Figure 11 and the processor 1210 of Figure 12 may also comprise board memory for caching purposes.

The computer program 1130 of Figure 11, and the computer program 1230 of Figure 12 may be carried by a computer program product connected to the processor 1110 of Figure 11, and the processor 1210 of Figure 12. The computer program products may be or comprise a non-transitory computer readable storage medium on which the computer programs 1130 of Figure 11 and the computer program 1230 of Figure 12 are stored. For example, the computer program products may be a flash memory, a Random-access memory (RAM), a Read-Only memory (ROM), or an EEPROM, and the computer programs described above could in alternative embodiments be distributed on different computer program products in the form of memories.

It shall be understood that although the terms "first", "second", etc. may be used herein to describe various elements, these elements should not be limited by these terms. These terms are only used to distinguish one element from another. For example, the first attribute value could be termed the second attribute value, and similarly, the second attribute value could be termed the first attribute value.

As used herein, the term "and/or" includes any and all combinations of one or more of the associated listed terms. The terminology used herein is for the purpose of describing particular embodiments only and is not intended to be limited of example embodiments. As used herein, the single forms "a", "an", and "the" are intended to include the plural forms as well, unless the context clearly indicated otherwise. It will be further understood that the terms "comprises", "comprising", "has", "having", "includes", and/or "including", when used herein, specify the presence of stated features, elements, and/or components etc. but do not preclude the presence or addition of one or more other features, elements, components, and/or combinations thereof.

This disclosure has been described above in reference to embodiments thereof. It should be understood that various modifications, alternatives, and additions can be made by those skilled in the art without departing from the scope of the disclosure. Therefore, the scope of the disclosure is not limited to the above particular embodiments but only defined by the claims as attached.

## Claims

1. A Lightweight Directory Access Protocol, LDAP, server device (130) for storing a first attribute value corresponding to a latest registered time for user login to a network function device (110), and a second attribute value corresponding to a time when the user was latest authenticated, and is configured to:
receive, from an LDAP client device (120), an authentication notification message after the user has been successfully authenticated, the authentication notification message indicating a successful authentication of the user and is performed by the network function device, wherein the authentication notification message comprises a timestamp corresponding to a time associated with the successful authentication of the user; and
update the second attribute value to a value that corresponds to or is the time associated with the successful authentication of the user.

2. The LDAP server device (130) according to claim 1, configured to generate the second attribute value after reception of the authentication notification message.

3. The LDAP server device (130) according to any one of claims 1-2, configured to send, to the LDAP client device (120), a response message to the authentication notification message, wherein the response message comprises the second attribute value before the update.

4. The LDAP server device (130) according to any one of claims 1-3, wherein the authentication notification message is an LDAP Extended Operation Request for notifying the successful authentication of the user.

5. The LDAP server device (130) according to any one of claims 1-4, the LDAP server device (130) is configured to provide the second attribute value to an identity management service function.

6. A Lightweight Directory Access Protocol, LDAP, client device (120) configured to:
send, to an LDAP server device (130), an authentication notification message after a user has been successfully authenticated, wherein the authentication notification message notifies that the user has been successfully authenticated by a network function device, wherein the authentication notification message comprises a timestamp corresponding to a time associated with the successful authentication of the user.

7. The LDAP client device (120) according to claim 6 configured to:
receive, from the LDAP server device (130), a response message to the authentication notification message, wherein the response message comprises an attribute value corresponding to a time the user was latest successfully authenticated.

8. The LDAP client device (120) according to any one of claims 6-7, wherein the authentication notification message is an LDAP Extended Operation request.

9. An operational support system (140) for a communication network, comprising a Lightweight Directory Access Protocol, LDAP, server device (130) according to any one of claims 1-5 and an LDAP client device (120) according to any one of claims 6-8.

10. A method (200) performed by a Lightweight Directory Access Protocol, LDAP, server device (130), for storing a first attribute value corresponding to a latest registered time for user login to a network function device, and a second attribute value corresponding to a time when the user was latest authenticated, the method comprising:
receiving (210), from an LDAP client device (120), an authentication notification message after the user has been successfully authenticated, the authentication notification message indicating a successful authentication of the user performed by the network function device, wherein the authentication notification message comprises a timestamp corresponding to a time associated with the successful authentication of the user; and
updating (230) the second attribute value to a value that corresponds to or is the time associated with the successful authentication of the user.

11. A method (300) performed by a Lightweight Directory Access Protocol, LDAP, client device (120), and comprising:
sending (310), to an **LDAP** server device (130), an authentication notification message after a user has been successfully authenticated, wherein the authentication notification message notifies that the user has been successfully authenticated by a network function device, wherein the authentication notification message comprises a timestamp corresponding to a time associated with the successful authentication of the user.

12. A method (500) performed by an operational support system (140) for a communication network, comprising a Lightweight Directory Access Protocol, LDAP, server device (130) according to claim 10 and an LDAP client device (120) according to claim 11.

13. A computer program (1130) for storing a first attribute value corresponding to a latest registered time for user login to a network function device, and a second attribute value corresponding to a time when the user was latest authenticated, comprising instructions, which when executed by a Lightweight Directory Access Protocol, LDAP, server device (130), causes the LDAP server device (130) to:
receive, from an LDAP client device (120), an authentication notification message after the user has been successfully authenticated, the authentication notification message indicating a successful authentication of the user performed by the network function device, wherein the authentication notification message comprises a timestamp corresponding to a time associated with the successful authentication of the user; and
update the second attribute value to a value that corresponds to or is the time associated with the successful authentication of the user.

14. A computer program (1230) comprising instructions, which when executed by a Lightweight Directory Access Protocol, LDAP, client device (120), causes the LDAP client device (120) to:
send, to an LDAP server device (130), an authentication notification message after a user has been successfully authenticated, wherein the authentication notification message notifies that the user has been successfully authenticated by a network function device, wherein the authentication notification message comprises a timestamp corresponding to a time associated with the successful authentication of the user.

15. A computer program storage medium comprising a computer program according to claims 13 and/or 14.

## Patentansprüche

1. Ein Lightweight Directory Access Protocol, LDAP, -Servergerät (130) zum Speichern eines ersten Attributwerts, welcher einem letzten Registrierungszeitpunkt für die Benutzeranmeldung bei einem Netzwerkfunktionsgerät (110) entspricht, und eines zweiten Attributwerts, welcher einem Zeitpunkt entspricht, zu dem der Benutzer zuletzt authentifiziert wurde, wobei das LDAP-Servergerät (130) folgendermaßen konfiguriert ist:
Empfangen einer Authentifizierungsbenachrichtigungsnachricht von einem LDAP-Clientgerät (120), nachdem der Benutzer erfolgreich authentifiziert wurde, wobei die Authentifizierungsbenachrichtigungsnachricht eine erfolgreiche Authentifizierung des Benutzers anzeigt und vom Netzwerkfunktionsgerät ausgeführt wird, wobei die Authentifizierungsbenachrichtigungsnachricht einen Zeitstempel umfasst, welcher einem Zeitpunkt entspricht der mit der erfolgreichen Authentifizierung des Benutzers assoziiert ist; und
Aktualisieren des zweiten Attributwerts auf einen Wert, welcher dem Zeitpunkt entspricht oder der Zeitpunkt ist, der mit der erfolgreichen Authentifizierung des Benutzers assoziiert ist.

2. Das LDAP-Servergerät (130) gemäß Anspruch 1, welches so konfiguriert ist, dass es den zweiten Attributwert nach dem Empfang der Authentifizierungsbenachrichtigungsnachricht generiert.

3. Das LDAP-Servergerät (130) gemäß einem der Ansprüche 1-2, das so konfiguriert ist, dass es eine Antwortnachricht auf die Authentifizierungsbenachrichtigungsnachricht an das LDAP-Clientgerät (120) sendet, wobei die Antwortnachricht den zweiten Attributwert vor der Aktualisierung umfasst.

4. Das LDAP-Servergerät (130) gemäß einem der Ansprüche 1-3, wobei die Authentifizierungsbenachrichtigungsnachricht eine LDAP erweiterte Betriebsanforderung zum Benachrichtigen über die erfolgreiche Authentifizierung des Benutzers ist.

5. Das LDAP-Servergerät (130) gemäß einem der Ansprüche 1-4, wobei das LDAP-Servergerät (130) so konfiguriert ist, dass es den zweiten Attributwert an eine Identitätsverwaltungsdienstfunktion bereitstellt.

6. Ein Lightweight Directory Access Protocol, LDAP, -Clientgerät (120), welches folgendermaßen konfiguriert ist:
Senden einer Authentifizierungsbenachrichtigungsnachricht an ein LDAP-Servergerät (130), nachdem ein Benutzer erfolgreich authentifiziert wurde, wobei die Authentifizierungsbenachrichtigungsnachricht mitteilt, dass der Benutzer erfolgreich von einem Netzwerkfunktionsgerät authentifiziert wurde, wobei die Authentifizierungsbenachrichtigungsnachricht einen Zeitstempel umfasst, welcher einem Zeitpunkt entspricht, der mit der erfolgreichen Authentifizierung des Benutzers assoziiert ist.

7. Das LDAP-Clientgerät (120) gemäß Anspruch 6, das folgendermaßen konfiguriert ist:
Empfangen einer Antwortnachricht von dem LDAP-Servergerät (130) auf die Authentifizierungsbenachrichtigungsnachricht, wobei die Antwortnachricht einen Attributwert umfasst, der einem Zeitpunkt entspricht, zu dem der Benutzer zuletzt erfolgreich authentifiziert wurde.

8. Das LDAP-Clientgerät (120) gemäß einem der Ansprüche 6-7, wobei die Authentifizierungsbenachrichtigungsnachricht eine LDAP erweiterte Betriebsanforderung ist.

9. Ein Betriebsunterstützungssystem (140) für ein Kommunikationsnetzwerk, das ein Lightweight Directory Access Protocol, LDAP, -Servergerät (130) gemäß einem der Ansprüche 1-5 und ein LDAP-Clientgerät (120) gemäß einem der Ansprüche 6-8 umfasst.

10. Ein Verfahren (200), das von einem Lightweight Directory Access Protocol, LDAP, -Servergerät (130) ausgeführt wird, zum Speichern eines ersten Attributwerts, der einem letzten Registrierungszeitpunkt für die Benutzeranmeldung bei einem Netzwerkfunktionsgerät entspricht, und eines zweiten Attributwerts, der einem Zeitpunkt entspricht, zu dem der Benutzer zuletzt authentifiziert wurde, wobei das Verfahren Folgendes umfasst:
Empfangen (210) einer Authentifizierungsbenachrichtigungsnachricht von einem LDAP-Clientgerät (120), nachdem der Benutzer erfolgreich authentifiziert wurde, wobei die Authentifizierungsbenachrichtigungsnachricht eine erfolgreiche Authentifizierung des Benutzers durch das Netzwerkfunktionsgerät anzeigt, wobei die Authentifizierungsbenachrichtigungsnachricht einen Zeitstempel umfasst, welcher einem Zeitpunkt entspricht, der mit der erfolgreichen Authentifizierung des Benutzers assoziiert ist; und
Aktualisieren (230) des zweiten Attributwerts auf einen Wert, welcher dem Zeitpunkt entspricht oder der Zeitpunkt ist, der mit der erfolgreichen Authentifizierung des Benutzers assoziiert ist.

11. Ein Verfahren (300), das von einem Lightweight Directory Access Protocol, LDAP, -Clientgerät (120) ausgeführt wird und Folgendes umfasst:
Senden (310) einer Authentifizierungsbenachrichtigungsnachricht an ein LDAP-Servergerät (130), nachdem ein Benutzer erfolgreich authentifiziert wurde, wobei die Authentifizierungsbenachrichtigungsnachricht mitteilt, dass der Benutzer erfolgreich von einem Netzwerkfunktionsgerät authentifiziert wurde, wobei die Authentifizierungsbenachrichtigungsnachricht einen Zeitstempel umfasst, welcher einem Zeitpunkt entspricht, der mit der erfolgreichen Authentifizierung des Benutzers assoziiert ist.

12. Ein Verfahren (500), das von einem operativen Unterstützungssystem (140) für ein Kommunikationsnetzwerk durchgeführt wird, wobei das Verfahren ein Lightweight Directory Access Protocol, LDAP, -Servergerät (130) gemäß Anspruch 10 und ein LDAP-Clientgerät (120) gemäß Anspruch 11 umfasst.

13. Ein Computerprogramm (1130) zum Speichern eines ersten Attributwerts, der einem letzten registrierten Zeitpunkt der Benutzeranmeldung bei einem Netzwerkfunktionsgerät entspricht, und eines zweiten Attributwerts, der einem Zeitpunkt entspricht, zu dem der Benutzer zuletzt authentifiziert wurde, mit Anweisungen, die, sofern sie von einem Lightweight Directory Access Protocol, LDAP, -Servergerät (130) ausgeführt werden, das LDAP-Servergerät (130) zu Folgendem veranlassen
Empfangen einer Authentifizierungsbenachrichtigungsnachricht von einem LDAP-Clientgerät (120), nachdem der Benutzer erfolgreich authentifiziert wurde, wobei die Authentifizierungsbenachrichtigungsnachricht eine erfolgreiche Authentifizierung des Benutzers durch das Netzwerkfunktionsgerät anzeigt, wobei die Authentifizierungsbenachrichtigungsnachricht einen Zeitstempel umfasst, welcher einem Zeitpunkt entspricht, der mit der erfolgreichen Authentifizierung des Benutzers assoziiert ist; und
Aktualisieren des zweiten Attributwerts auf einen Wert, welcher dem Zeitpunkt entspricht oder der Zeitpunkt ist, der mit der erfolgreichen Authentifizierung des Benutzers assoziiert ist.

14. Ein Computerprogramm (1230), das Anweisungen umfasst, die, sofern sie von einem Lightweight Directory Access Protocol, LDAP, -Clientgerät (120) ausgeführt werden, das LDAP-Clientgerät (120) zu Folgendem veranlassen:
Senden einer Authentifizierungsbenachrichtigungsnachricht an ein LDAP-Servergerät (130), nachdem ein Benutzer erfolgreich authentifiziert wurde, wobei die Authentifizierungsbenachrichtigungsnachricht mitteilt, dass der Benutzer erfolgreich von einem Netzwerkfunktionsgerät authentifiziert wurde, wobei die Authentifizierungsbenachrichtigungsnachricht einen Zeitstempel umfasst, welcher einem Zeitpunkt entspricht, der mit der erfolgreichen Authentifizierung des Benutzers assoziiert ist.

15. Ein Computerprogramm-Speichermedium, das ein Computerprogramm gemäß Anspruch 13 und/oder 14 umfasst.

## Revendications

1. Dispositif serveur LDAP (Lightweight Directory Access Protocol) (130) destiné à stocker une première valeur d'attribut correspondant au dernier moment d'enregistrement de connexion d'un utilisateur à un dispositif de fonction réseau (110) et une deuxième valeur d'attribut correspondant au dernier moment d'authentification de l'utilisateur, et configuré pour :
recevoir, à partir d'un dispositif client LDAP (120), un message de notification d'authentification après que l'utilisateur a été authentifié avec succès, le message de notification d'authentification indiquant une authentification réussie de l'utilisateur et étant exécuté par le dispositif de fonction réseau, dans lequel le message de notification d'authentification comprend un horodatage correspondant à un moment associé à l'authentification réussie de l'utilisateur ; et
mettre à jour la deuxième valeur d'attribut à une valeur qui correspond au ou est le moment associé à l'authentification réussie de l'utilisateur.

2. Le dispositif serveur LDAP (130) selon la revendication 1, configuré pour générer la deuxième valeur d'attribut après la réception du message de notification d'authentification.

3. Dispositif serveur LDAP (130) selon l'une quelconque des revendications 1 à 2, configuré pour envoyer, au dispositif client LDAP (120), un message de réponse au message de notification d'authentification, dans lequel le message de réponse comprend la deuxième valeur d'attribut avant la mise à jour.

4. Dispositif serveur LDAP (130) selon l'une quelconque des revendications 1 à 3, dans lequel le message de notification d'authentification est une requête d'opération étendue LDAP pour notifier l'authentification réussie de l'utilisateur.

5. Dispositif serveur LDAP (130) selon l'une quelconque des revendications 1 à 4, le dispositif serveur LDAP (130) étant configuré pour fournir la deuxième valeur d'attribut à une fonction de service de gestion d'identité.

6. Dispositif client LDAP (Lightweight Directory Access Protocol) (120) configuré pour :
envoyer, à un dispositif serveur LDAP (130), un message de notification d'authentification après qu'un utilisateur a été authentifié avec succès, dans lequel le message de notification d'authentification notifie que l'utilisateur a été authentifié avec succès par un dispositif de fonction réseau, dans lequel le message de notification d'authentification comprend un horodatage correspondant à un moment associé à l'authentification réussie de l'utilisateur.

7. Le dispositif client LDAP (120) selon la revendication 6 étant configuré pour :
recevoir, du dispositif serveur LDAP (130), un message de réponse au message de notification d'authentification, dans lequel le message de réponse comprend une valeur d'attribut correspondant à un moment où l'utilisateur a été authentifié avec succès pour la dernière fois.

8. Le dispositif client LDAP (120) selon l'une quelconque des revendications 6 à 7, dans lequel le message de notification d'authentification est une requête d'opération étendue LDAP.

9. Système de support opérationnel (140) pour un réseau de communication, comprenant un dispositif serveur LDAP (Lightweight Directory Access Protocol) (130) selon l'une quelconque des revendications 1 à 5 et un dispositif client LDAP (120) selon l'une quelconque des revendications 6 à 8.

10. Procédé (200) exécuté par un dispositif serveur LDAP (Lightweight Directory Access Protocol) (130) pour stocker une première valeur d'attribut correspondant à un dernier moment d'enregistrement de connexion d'un utilisateur à un dispositif de fonction réseau, et une deuxième valeur d'attribut correspondant à un moment auquel l'utilisateur a été authentifié pour la dernière fois, le procédé comprenant :
la réception (210), à partir d'un dispositif client LDAP (120), d'un message de notification d'authentification après que l'utilisateur a été authentifié avec succès, le message de notification d'authentification indiquant une authentification réussie de l'utilisateur effectuée par le dispositif de fonction réseau, dans lequel le message de notification d'authentification comprend un horodatage correspondant à un moment associé à l'authentification réussie de l'utilisateur ; et
la mise à jour (230) de la deuxième valeur d'attribut à une valeur qui correspond au ou est le moment associé à l'authentification réussie de l'utilisateur.

11. Procédé (300) exécuté par un dispositif client LDAP (Lightweight Directory Access Protocol) (120), comprenant :
l'envoi (310), à un dispositif serveur LDAP (130), d'un message de notification d'authentification après qu'un utilisateur a été authentifié avec succès, dans lequel le message de notification d'authentification notifie que l'utilisateur a été authentifié avec succès par un dispositif de fonction réseau, dans lequel le message de notification d'authentification comprend un horodatage correspondant à un moment associé à l'authentification réussie de l'utilisateur.

12. Procédé (500) exécuté par un système de support opérationnel (140) pour un réseau de communication, comprenant un dispositif serveur LDAP (Lightweight Directory Access Protocol) (130) selon la revendication 10 et un dispositif client LDAP (120) selon la revendication 11.

13. Programme informatique (1130) destiné à stocker une première valeur d'attribut correspondant au dernier moment d'enregistrement de connexion d'un utilisateur à un dispositif de fonction réseau, et une deuxième valeur d'attribut correspondant au moment auquel l'utilisateur a été authentifié pour la dernière fois, comprenant des instructions qui, lorsqu'elles sont exécutées par un dispositif serveur LDAP (Lightweight Directory Access Protocol) (130), amènent le dispositif serveur LDAP (130) à :
recevoir, à partir d'un dispositif client LDAP (120), un message de notification d'authentification après que l'utilisateur a été authentifié avec succès, le message de notification d'authentification indiquant une authentification réussie de l'utilisateur effectuée par le dispositif de fonction réseau, dans lequel le message de notification d'authentification comprend un horodatage correspondant à un moment associé à l'authentification réussie de l'utilisateur ; et
mettre à jour la deuxième valeur d'attribut à une valeur qui correspond au ou est le moment associé à l'authentification réussie de l'utilisateur.

14. Programme informatique (1230) comprenant des instructions qui, lorsqu'elles sont exécutées par un dispositif client LDAP (Lightweight Directory Access Protocol) (120), amènent le dispositif client LDAP (120) à :
envoyer, à un dispositif serveur LDAP (130), un message de notification d'authentification après qu'un utilisateur a été authentifié avec succès, dans lequel le message de notification d'authentification notifie que l'utilisateur a été authentifié avec succès par un dispositif de fonction réseau, dans lequel le message de notification d'authentification comprend un horodatage correspondant à un moment associé à l'authentification réussie de l'utilisateur.

15. Support de stockage de programme informatique comprenant un programme informatique selon les revendications 13 et/ou 14.
